# EUROPEAN PATENT SPECIFICATION

(11) **EP 4 442 339 B1**
(45) Date of publication and mention of the grant of the patent: **14.10.2026**
(21) Application number: 24160520.3
(22) Date of filing: 29.02.2024
(51) Int. Cl.: A63F 13/67, A63F 13/92, A63F 13/323

(54) **APPARATUS AND METHOD**
VORRICHTUNG UND VERFAHREN
APPAREIL ET PROCÉDÉ

(30) Priority: 09.03.2023 GB 202303482
(43) Date of publication of application: 09.10.2024
(73) Proprietor: Sony Interactive Entertainment Inc., Tokyo 108-0075 (JP)
(72) Inventor: MULLIGAN, Paul, London, W1F 7LP (GB)
(74) Representative: Fish & Richardson P.C.

(56) References cited:
- EP-A1- 0 997 172
- JP-A- 2002 172 576
- US-A1- 2009 157 221
- US-B1- 8 996 429

## Description

This disclosure relates to apparatus, method and computer program.

Data processing apparatus such as computer games machines can be controlled by useroperable control devices configured to provide user input to control or at least influence the execution of data processing operations such as computer game play and/or the execution of a computer game program.

It is in this context that the present disclosure arises.

In recent years, robotic devices such as for example robotic pets or companions. These mechanical pets are designed to fulfil certain functions to entertainment, and also in many cases general utility and/or companionship, to the owner or user.

As an example, Sony's^{®} Aibo^{®} robotic device aims to mimic a common household pet. The Aibo device's manner of behaviour and interaction (referred to here as a "personality") develops by interacting with people and each such robotic device is able to develop in its own way based on these interactions.

Previously proposed arrangements are disclosed in US 8,996,429 B1, which describes methods and systems for robot personality development.

It is in this context that the present disclosure arises.

The invention is defined by the appended claims.

The present disclosure provides apparatus comprising:
a robotic device comprising a plurality of interfaces to allow interaction with a user, the interfaces comprising one or more input interfaces to detect input to the robotic device by the user and one or more output interfaces to perform output actions, and action generating circuitry to generate output actions to be executed by the one or more output interfaces in response to action parameter data;
a portable device comprising circuitry to provide a simulated interface to simulate at least a subset of the plurality of interfaces of the robotic device; and
behaviour processing circuitry to generate variations of the action parameter data in response to user interaction with the plurality of interfaces of the robotic device and in response to user interaction with the simulated interface of the portable device.

The present disclosure also provides a method comprising:
generating output actions to be executed by one or more output interfaces of a robotic device comprising a plurality of interfaces to allow interaction with a user, the interfaces comprising one or more input interfaces to detect input to the robotic device by the user and the one or more output interfaces to perform output actions, the generating step being performed in response to action parameter data;
simulating, using a portable device, at least a subset of the plurality of interfaces of the robotic device; and
generating variations of the action parameter data in response to user interaction with the plurality of interfaces of the robotic device and in response to user interaction with the at least a subset of the plurality of interfaces simulated by the simulating step.

The present disclosure also provides computer software which, when executed by one or more computers, causes the one or more computers to perform such a method.

The present disclosure also provides a non-tangible machine-readable storage medium which stores such computer software.

Various further aspects and features of the present disclosure are defined in the appended claims and within the text of the accompanying description.

Embodiments of the disclosure will now be described, by way of example only, with reference to the accompanying drawings, in which:
Figure 1 schematically illustrates a first example of a robotic device;
Figure 2 schematically illustrates another example of a robotic device;
Figure 3 schematically illustrates an example robotic leg apparatus;
Figure 4 schematically illustrates an example robotic head apparatus;
Figure 5 schematically illustrates example control circuitry;
Figure 6 schematically illustrates the example control circuitry of Figure 5 in more detail;
Figure 7 is a schematic flowchart illustrating an example method;
Figure 8 schematically illustrates an example possible device;
Figures 9 to 17 are schematic flowcharts illustrating respective example methods;
Figure 18 schematically illustrates an example quick response (QR) code;
Figure 19 is a schematic flowchart illustrating an example method;
Figure 20 schematically illustrates a near field communication (NFC) arrangement; and
Figures 21 and 22 are schematic flowcharts illustrating respective example methods.

### Examples of robotic devices

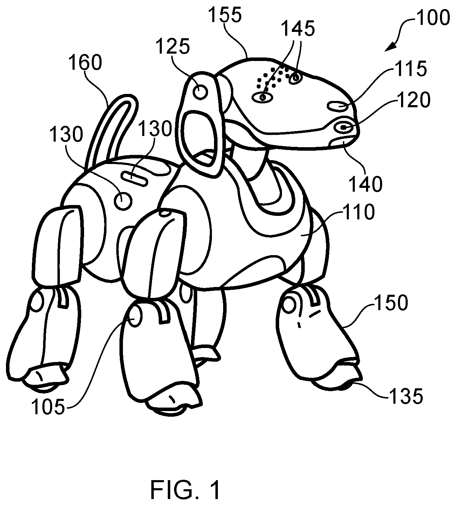

Referring now to the drawings, Figure 1 schematically illustrates an example robotic device 100 which in this example is represented by a robotic dog such as a Sony^{®} Aibo^{®} robotic device.

The robotic device has multiple articulated joints associated with servo motors such as a motorised joint 105 to allow the limbs, tail, head 155, mouth and ears of the robotic device (or attached to the robotic dog's body 110 which may itself be articulated around a simulated waist portion) to be moved in a manner which aims to simulate actions of a real dog. Operation of the servo motors will be discussed in more detail below. Motors may also be associated with eyes 145 of the robotic dog to allow the eyes to be moved and/or eyelids closed to simulate similar actions of a real dog.

A loudspeaker 140 may be provided to allow the sound to be output by the robotic device.

The robotic device also comprises various sensors which can detect the ambient surroundings and also actions of a user who is interacting with the robotic device. Examples include one or more air-quality sensors 115, which may for example be located near the nose portion of the robotic dog, one or more video cameras such as a video camera 120, one or more microphones 125 which may for example be located at or near to ear portions of the robotic dog and one or more touch sensors 130 to detect physical user interaction with the robotic device. Other sensors not shown in Figure 1 may also be included such as, for example, ground contact sensors to detect whether each paw 135 is currently in contact with the ground or another hard surface, one or more orientation detectors to detect a current orientation of the robotic device (and potentially whether the robotic device is near to a situation of over balancing), one or more proximity sensors such as a so-called passive infrared (PIR) sensor to detect whether a user or a real animal are nearby, one or more temperature sensors and/or one or more location and/or movement sensors.

It will therefore be appreciated that a user may interact with the robotic device 100 in many different ways. The user can provide input to the robotic device 100 by activating or providing input to one or more of the various sensors discussed above, for example by approaching the robotic device (which may be detected by the video camera, microphone or PIR sensors for example), touching the robotic device (which may be detected by the video camera, microphone, touch sensors or motion sensors for example), making noises or talking to the robotic device (which may be detected by the microphone for example) or the like. The arrangements which primarily allow the robotic device to interact with the user comprise the various servo motors allowing the robotic device to move, wave, rollover, blink, open its mouth or the like and the loudspeaker 140 which allows the robotic device to make dog -like or other noises.

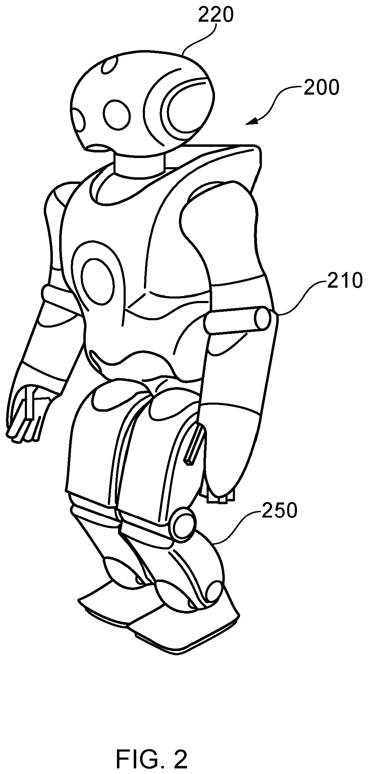

It will be appreciated that the present techniques are not limited to the field of robotic dogs. Robotic devices can be fabricated in various forms including wheeled robots, quadrupeds such as the robotic dog of Figure 1, bipeds such as a robotic humanoid shown in Figure 2 (for example the Sony^{®} QRIO ^{®} robotic device and so on. The robotic humanoid 200 of Figure 2 may comprise a similar arrangement of motorised articulated joints such as an elbow joint 210 and a similar arrangement of sensors disposed around the robotic device including (in the case of cameras, microphones, loudspeakers and the like) at the head 220 of the robotic device 200.

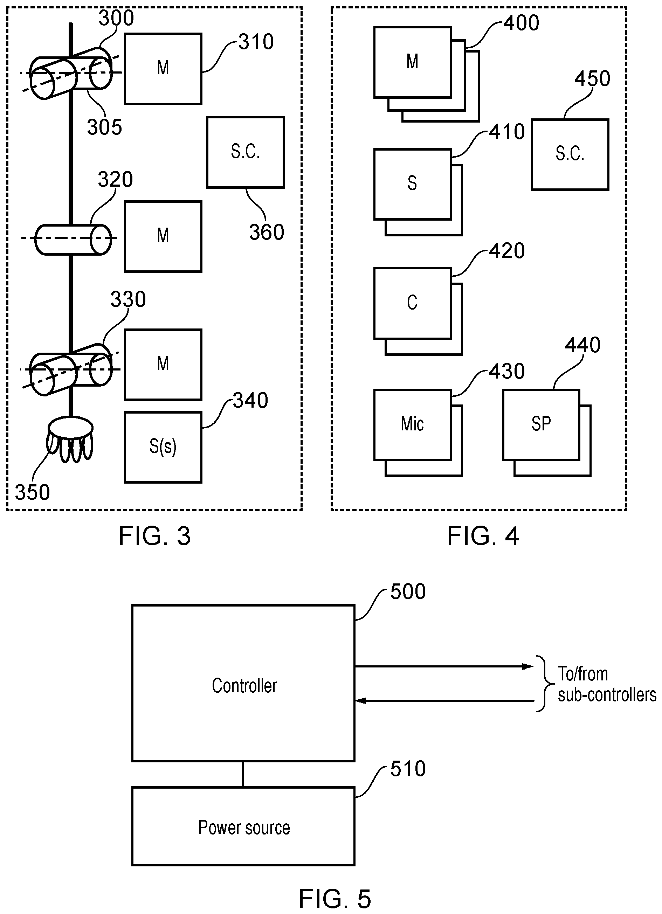

In more detail, Figure 3 schematically illustrates aspects of one of the legs 150, 250 of the robotic devices of Figures 1 and 2. Each leg may comprise a motorised articulated hip joint 300 schematically represented by an articulation 305 having, in this example, two degrees of freedom and an associated motor arrangement (M) 310. A motorised articulated knee joint 320 may be simulated using an articulation having only one degree of freedom and a motorised articulated ankle joint 330 may be simulated using an articulation having two degrees of freedom. One or more sensors 340 are provided, including a ground contact sensor at the foot 350 and potentially other sensors such as surface contact sensors. Optionally, a sub controller 360 may be provided so as to receive leg -related commands relating to that particular leg from higher-level control circuitry such as that described with reference to Figure 5 below and to provide collated legrelated sensor data back to the higher level control circuitry.

In the case of a robotic animal having a tail 160, a generally similar arrangement to that of Figure 3 may be used for the tail structure, though potentially fewer articulations are required and a ground contact sensor is probably not needed.

Figure 4 schematically illustrates an example arrangement for the head 155, 220 of the robotic device of Figure 1 or 2. Again, various motors 400 may be provided to drive ear movements, mouth movements, neck articulation, eye movements and the like. Sensors 410 of the type described above with reference to Figure 1 may be provided including one or more cameras 420 and one or more microphones 430. One or more sound output devices such as loudspeakers 440 may be provided and all of these devices may be controlled by and provide data back to a sub controller 450 which communicates with the higher-level control circuitry described with reference to Figure 5 below.

Figure 5 schematically illustrates control circuitry 500 with an associated power source 510 (for example, a rechargeable battery housed within the robotic device) to control operations of the robotic device. The control circuitry 500 is configured to communicate bidirectionally with the various sub controllers discussed above or, in the case that sub controllers are not provided, directly with each servo motor, sensor and output device.

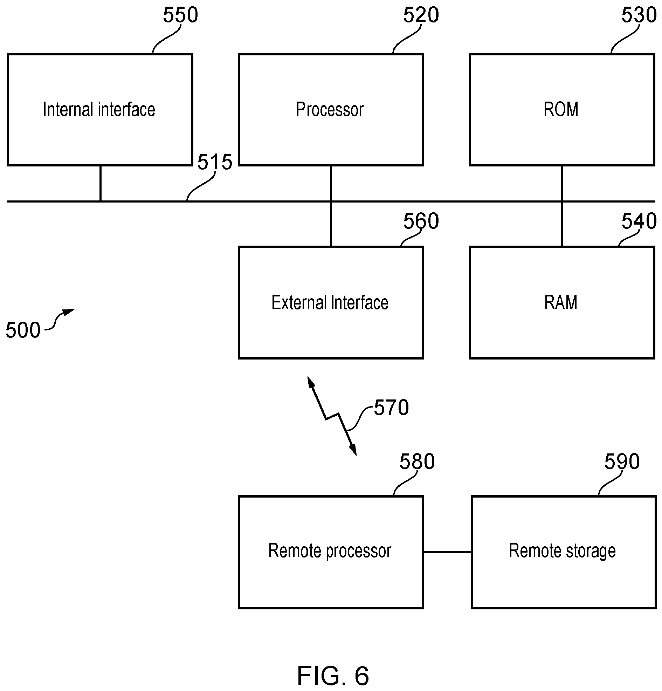

Figure 6 schematically illustrates the control circuitry 500 in more detail, in that a bus structure 515 provides interconnection between a processor 520, read-only memory (ROM) 530, random access memory (RAM) 540, internal interface circuitry 550 to provide interfacing with the sub controllers and external interface circuitry 560 which, optionally, provides an interface (for example via a wireless and/or Internet connection 570 with remote circuitry such as a remote server having a remote processor 580 and remote storage 590.

### Learning or development of behaviours

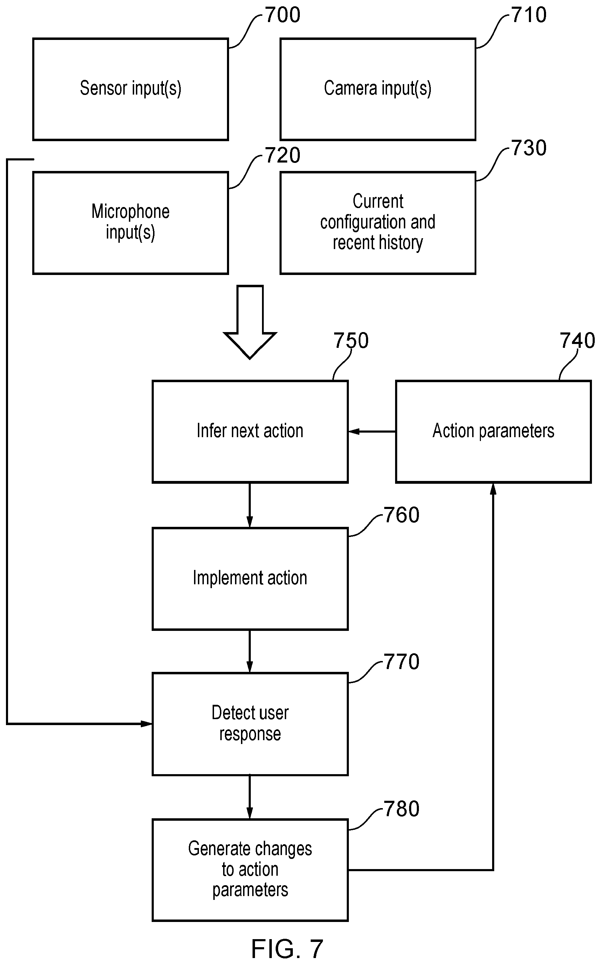

Figure 7 is a schematic flowchart illustrating an example method which may be performed at the robotic device 100, 200. Input to the process are sensor inputs 700, camera inputs 710, microphone inputs 720 and optionally a current configuration and recent history of actions 730 (for example stored in the RAM 540).

As background, an aim of a robotic device such as that shown in Figure 1 or Figure 2 is to interact with a user in a manner which is pleasing and enjoyable to the user. A feature of such robotic devices may be to learn, develop or "grow" in response to user interactions. So, although the hardware may not necessarily change with time, the robotic device may develop the manner by which it interacts with the user in response to ongoing user interactions. For example, if the robotic device (taking the example of the robotic dog) detects that the user frequently strokes the touch sensors of the robotic device while audibly interacting with the robotic device (for example talking to it) the robotic device may develop a behaviour of rolling over onto its side so as to encourage such behaviour by the user, while making gentle appreciative dog-like sounds via the loudspeaker.

Such behaviour changes can be predetermined so as to be enabled or "unlocked" by a generally predetermined set of user interactions with the robotic device, and indeed in its broadest aspect the present disclosure encompasses such an arrangement. However, in some robotic devices, machine learning or artificial intelligence is used to develop the robotic device's behaviours in response to user interaction, for example by randomly trying different behaviours and detecting features of the user interaction indicative of pleasure or displeasure.

In either case (predetermined development or machine learning development) the processor 520 refers to action parameters 740 which may be stored in the RAM 540 to infer (at a step 750) the next action to be performed by the robotic device in response to the inputs 700... 730 described above. In the case of the predetermined situation, the action parameters may indicate which behavioural developments have been triggered or unlocked so far by user interaction, whereas in the machine learning example the action parameters may provide a set of weights or the like for use by a machine learning process executed by the processor 520.

At a step 760 the robotic device implements the next action inferred at the step 750. At a step 770, a user response to the action implemented at the step 760 is detected from the inputs 700, 710, 720 and, at a step 780, changes may be implemented to the action parameters 740 in response to the detected user response. Once again, in the predetermined situation, the changes generated at the step 780 can be potentially to unlock behavioural actions which have previously been locked (or to lock behavioural actions which have previously been unlocked) whereas in the machine learning example the step 780 may form part of a training phase of a machine learning model in which the action parameters 740 provide machine learning weights or the like. Robotic devices of this type can therefore comprise a processor (which may for example implement an AI/ML model, providing an example in which the behaviour processing circuitry comprises machine learning circuitry configured to execute a machine learning process to generate the variations of the action parameter data) so as to learn and/or develop a certain simulated "personality" or character of interactions with the use over time in response to its environment and actual user interactions. It is conceivable that the user may become emotionally attached to the robotic device, or at least consider such ongoing interactions to be sufficiently enjoyable that they want to continue to interact with their robotic device while away from the home. In any event, continued interaction with the robotic device may be considered worthwhile in that it will further develop the "personality" of the robotic device.

Here, the term "personality" is used not to suggest or imply that the robotic device is human, or is living, but as a convenient term (implying an electronically simulated personality) for the manner of behaviour and interaction exhibited by the robotic device. The robotic device's "personality" may be demonstrated by the manner in which the robotic device responds to a prompt or other action by a human user (or even by another robotic device), but in other examples it may be demonstrated by an action taken pre-emptively by the robotic device, such as approaching a human user or another robotic device and initiating an interaction by making an audible noise and/or a movement for example.

However, a user taking a robotic device with them outside the home runs various risks. One is that the robotic device is simply rather too bulky and/or heavy to be conveniently portable. Another is that such activity runs the risk of theft, damage or loss of the robotic device, or of criticism by others.

An option provided by the present disclosure is as follows:
When the user is physically present with the robotic device, for example in the home, the user may interact with the robotic device in the manner discussed above.

However, when the user leaves the location (such as the home) of the robotic device, the user may initiate a surrogate or simulated interface with the robotic device's action parameters, for example in the form of computer software running on a portable device. Using this surrogate interface, the robotic device's "personality" may continue to grow and/or develop in response to user interactions with the surrogate interface, and such developments may be reinstated to the robotic device, for example when the user returns to the physical location of the robotic device.

### Example portable device and example apparatus

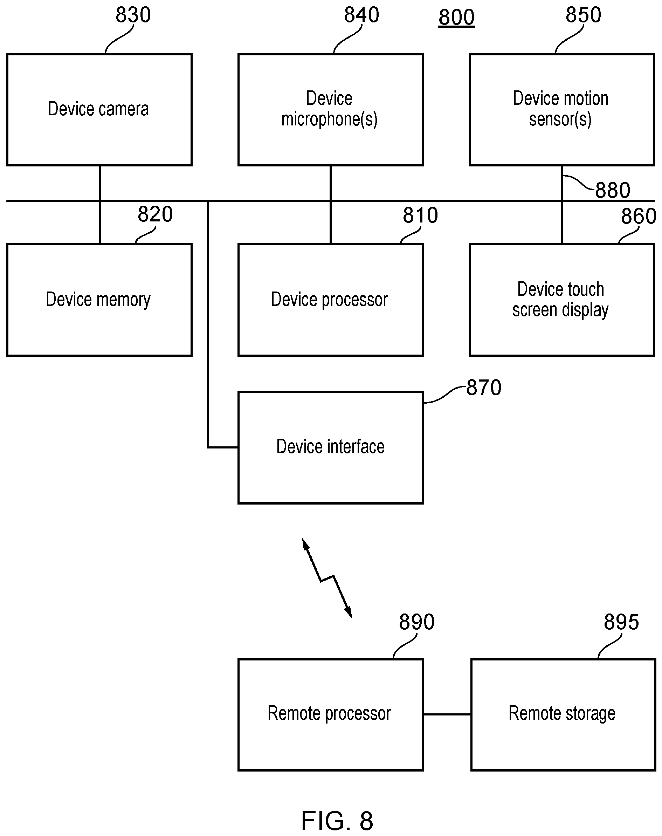

Figure 8 schematically illustrates an example of such a portable device 800, for example implemented as a so-called smart phone and comprising a processor 810 (referred to here as a "device processor" to distinguish it from the processor 520 of the robotic device), device memory 820, a device camera 830, a device microphone 840, a device motion sensor 850, a device touchscreen display 860 and a device interface 870 all interconnected by a bus structure 880. In operation, the device processor 810 executes computer software stored by the device memory 820 using the device camera, the device microphone, the device motion sensors and the device touchscreen display as inputs and using the display function of the device touchscreen display as a user output.

The portable device 800 is also optionally connectable via the device interface 870 to a remote processor 890 having an associated remote storage 895, for example implemented as a remote Internet and/or cloud server. In some examples, these may be the same devices as the remote processor 580 and the remote storage 590 respectively of Figure 6. For the purposes of the discussion below, it will be assumed that the same devices are used and so the remote process will be referred to by the reference numeral 580 the remote storage by the reference numeral 590.

An example apparatus therefore comprises:
a robotic device (100, 200) comprising a plurality of interfaces to allow interaction with a user, the interfaces comprising one or more input interfaces (410, 420, 430) to detect input to the robotic device by the user and one or more output interfaces (310, 400, 440) to perform output actions, and action generating circuitry (500) to generate output actions to be executed by the one or more output interfaces in response to action parameter data;
a portable device (800) comprising circuitry to provide a simulated interface (830, 840, 850, 860) to simulate at least a subset of the plurality of interfaces of the robotic device; and
behaviour processing circuitry (520, 580, 810, 890) to generate variations of the action parameter data in response to user interaction with the plurality of interfaces of the robotic device and in response to user interaction with the simulated interface of the portable device.

Note that the behaviour processing circuitry may be implemented, for example, by just the remote processor 580, or by the processor 520 for the robotic device and the remote processor 580 for the portable device, or by the various processors cooperating with one another. In some examples, the portable device may communicate with the processor 520 of the robotic device to perform action parameter updates for implementation at the portable device even when the apparatus is in the virtual mode (discussed below).

Therefore, these examples envisage various possibilities including:
the behaviour processing circuitry comprising first processing circuitry associated with the robotic device to generate variations of the action parameter data in response to user interaction with the plurality of interfaces of the robotic device; and second processing circuitry associated with the portable device to generate variations of the action parameter data in response to user interaction with the simulated interface of the portable device.

In another such example the first processing circuitry may comprise a remote server (580) configured to communicate with the robotic device.

In another such example the second processing circuitry may comprise a remote server (580, 890) configured to communicate with the robotic device.

### Local mode and virtual mode

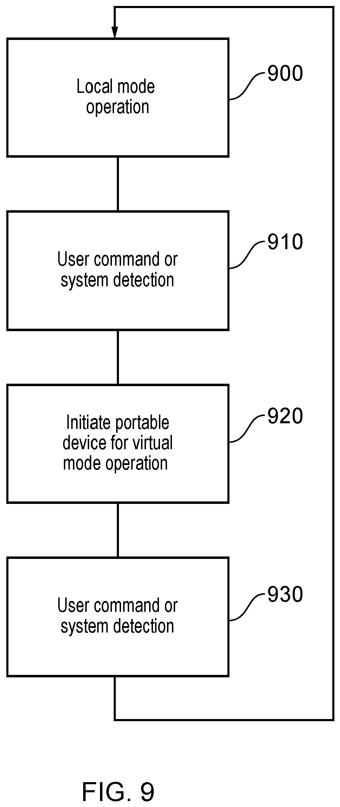

Before discussing operation of the portable device in more detail, Figure 9 schematically illustrates the overall process discussed briefly above. Starting with a step 900, the robotic device operates in a so-called local mode in which direct interaction between the user and the robotic device is processed according to the flowchart of Figure 7 for example so as to grow and/or develop the robotic device's "personality" by (for example) varying the action parameters 740 in response to detected and/or previously implemented user interactions.

At a step 910, in response to one or both of (a) a user command and (b) a system or automated detection (examples of which are given below) the portable device may be initiated for so-called "virtual mode" operation 920 (and in examples, enter such a mode) in which the portable device provides a surrogate interface for user interaction as though with the robotic device. Then, again in response to a user command and/or a system or automated detection at a step 930, operation of the system may return to local mode operation 900.

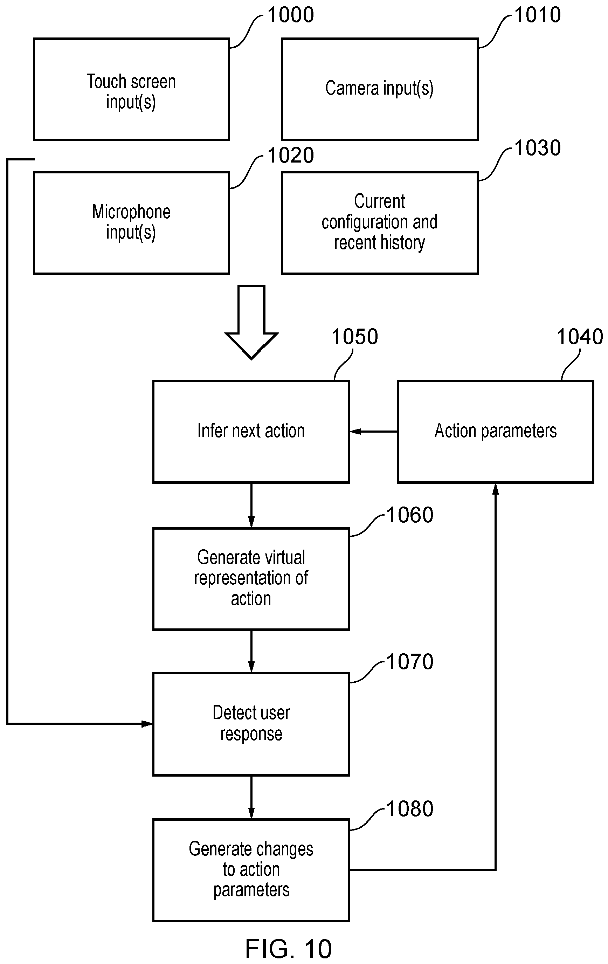

Figure 10 schematically illustrates some aspects of the virtual mode of operation and in many respects is similar to Figure 7 described above here, inputs to a step 1050 (corresponding in many ways to the step 750) comprise device touchscreen inputs 1000, device microphone inputs 1020, device camera inputs 1010 and a current configuration and recent history 1030. It is noted that the current configuration and recent history 1030 can be copied or transferred to the portable device of entering the virtual mode and copied or transferred to the robotic device on leaving the virtual mode and restarting the local mode.

The portable device stores action parameters 1040 which may be the same as, or a subset of, or overlapping with the action parameters 740.

In terms of the next action inferred at the step 1050, a virtual representation of that action is generated and implemented at a step 1060. A user response may be detected at a step 1070 based on the device touchscreen inputs, the device microphone inputs and the device camera inputs and changes to the action parameters 1040 generated at a step 1080.

So, in the virtual mode, and as discussed above, the portable device provides a surrogate interface to the "personality" (action parameters) of the robotic device with the opportunity for user actions to develop and/or vary the action parameters.

It will of course be appreciated that a portable device is not a robotic device. In other words, the ways in which a portable device can interact with the user may be very different to the ways in which a physical robotic device can interact with the user. Some aspects of interaction map very conveniently between the two, for example both arrangements may have one or more microphones and one or more cameras to capture user reactions to actions carried out by the real or virtual robotic device. Similarly, portions of the portable device's touchscreen display may be mapped to touch sensitive portions of the robotic device to detect user contact at those portions. In other respects, it is clear for example that a portable device such as a smartphone does not have motorised articulated joints, but movements of the robotic device's limbs, head, tail or the like may be mapped to displayed movements presented to the user via the touchscreen display. Motion and/or orientation detection at the robotic device may be mapped to motion and/or orientation detection of the portable device.

While such mappings may be possible for many aspects operation of the robotic device, there may be some aspects for which a mapping is not possible. In other words, the physical robotic device may have functionality that simply cannot be mapped to the normal interface components of a portable device such as a smartphone. An example here is that a robotic device may comprise an air quality sensor which, at least at the time of filing this application, is typically not available as a smartphone sensor input.

In summary the following mapping may be used by way of example:

| **Robotic device function** | **Mapped to portable device function?** |
|---|---|
| Camera | Camera |
| Microphone | Microphone |
| Movable limbs and body parts | Display image of movable limbs and body parts |
| Touch sensors | Detect touch at corresponding regions of touchscreen display |
| Motion and/or orientation detection | Motion and/or orientation detection |
| Other sensors | Not mapped |

Therefore, in some examples the plurality of interfaces of the robotic device may comprise at least one motorised articulated limb (150), moveable in response to the action generating circuitry; and the simulated interface may comprise at least a display (on the touch screen display 860) of an animated movement of a simulated representation of the at least one motorised articulated limb.

The question then arises as to how the step 1080 attempts to emulate the operation of the step 780 when potentially not all of the inputs available to the step 780 are available to the step 1080. In some examples, the unmapped sensor inputs may be set to a neutral or mid-point value for the purposes of the step 1080. In other examples, they may be set to a random or pseudorandom value for the purposes of the step 1080. In other examples, the user of the portable device may be offered the opportunity to provide a substitute input; for example, in the case of an air quality sensor which is not implemented at the portable device, the user may be asked (on-screen or audibly) "does that smell nice?" to which the user can answer yes or no, with a substitute input being generated to the step 1080 based upon the user's answer.

So, while it is not a requirement of the present disclosure that every possible robotic device action and user reaction is mapped as between the robotic device and the virtual mode operation, an aim may be that the experiences of interacting with the robotic device and with the surrogate interface provided by the virtual mode are made to be reasonably similar.

The matter of what happens to the robotic device one of the virtual mode is enabled will now be discussed.

In some examples, once the virtual mode operation has been established, the local mode operation can be either suspended completely, for example in that the robotic device becomes unresponsive to direct interactions, or varied, for example in that the robotic device responds to user interactions according to its prevailing action parameters 740 as they existed when the virtual mode operation was established, but does not perform the steps 770, 780 to further vary the action parameters 740.

When the virtual mode is ended by the step 930, then the modified action parameters at the portable device may be communicated back to the robotic device by a wireless, internet or other link.

In a further possible variant, in the local mode of operation, the steps 770, 780 are performed only in respect of user interaction with the robotic device itself, whereas when the virtual mode of operation is currently enabled, actions corresponding to the steps 770, 780 may be performed in respect of user interaction with the robotic device itself and in respect of user interaction with the surrogate interface at the portable device. For example, the steps may be performed by the remote processor 580 and any modifications to action parameters communicated back to the portable device and to the robotic device for implementation at the surrogate interface and at the robotic device. In this example, there is no need to communicate action parameters back to the robotic device when the virtual mode is ended by the step 930.

The question of the processing capabilities available at the robotic device and at the portable device will now be discussed.

Typically, the robotic device may have a dedicated processor 520 designed or at least prepared for efficient operation of the robotic device. The virtual mode, however, may be implemented by an arbitrary portable device which not only may be expected to have a more general purpose device processor, to suit the more generic needs of operating a portable device such as a smartphone, but which also may have an arbitrary level of processing power depending upon the age, quality, specification and the like of the portable device.

In some examples, some of the functions required by the flowchart of Figure 10, for example the step 1080, may be offloaded by the portable device to the remote processor 580 which, for example, may be under the control of the robotic device manufacturer to ensure that the remote processor 580 has a required level of processing power to perform the step 1080 for a plurality of portable devices in use.

In some examples, the software associated with implementing the virtual mode at a portable device may be restricted in its use to device processes of at least a threshold level of sophistication, processing power, memory availability or the like.

In some examples, the virtual mode may be associated with a surrogate but reduced version of the user interface associated with the real robotic device. The degree of reduction of the user interface may in turn be dependent upon technical parameters of the portable device such as sophistication, processing power, memory availability or the like.

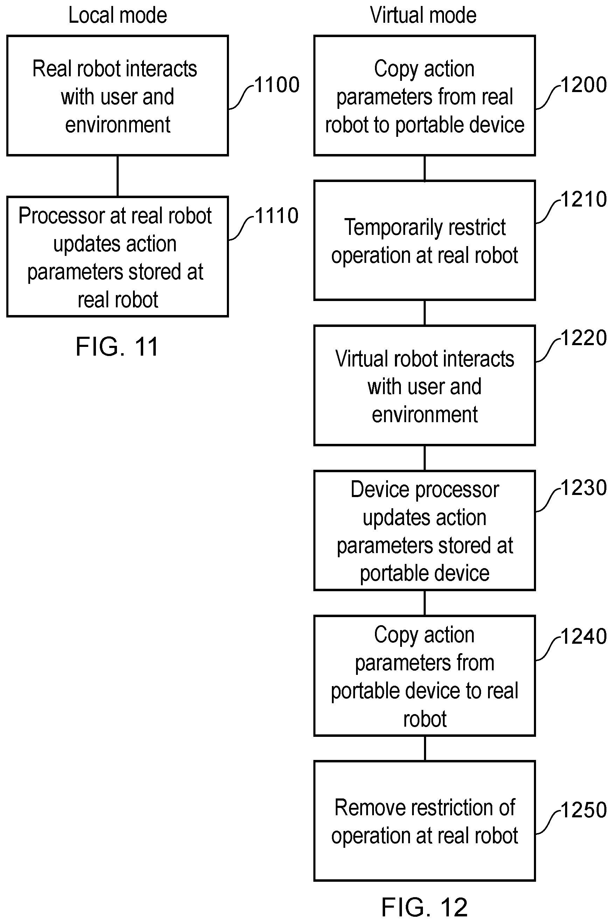

Figures 11 and 12 provide a summary of at least some of the examples of local and virtual mode operation discussed above.

In the local mode (Figure 11), at the step 1100 the real robotic device interacts with a user and the environment and, at the step 1110, the processor 520 at the real robotic device updates action parameters stored at the real robotic device in response to such interactions.

In the virtual mode (Figure 12) in at least some examples, at a step 1200 the action parameters 740, or a version of them, are copied or transferred to form action parameters 1040 at the portable device. In some examples, the simulated interface of the portable device is operational only in the second operation mode.

At a step 1210, operation at the real robotic device may be temporarily restricted as discussed above, or in other words operation of the plurality of interfaces of the robotic device may be at least partially inhibited in the virtual mode.

At a step 1220, the surrogate interface representing a virtual robotic device provided by the portable device interacts with a user and the environment and at a step 1230, the device processor 810 updates the action parameters 1040 held at the portable device. the device processor can act alone in doing this, for example by executing all or a subset of the program code which the robotic device uses to update the action parameters, or can cooperate to some extent with the processor 520 at the robotic device, for example by a wireless link (in that both devices can separately be wirelessly connected to the internet).

The steps 1220... 1240 may be repeated for as long as the system remains in the virtual mode.

At the end of virtual mode operation, at a step 1240, the action parameters at the portable device are copied or transferred to the real robotic device and, at the step 1250 the restriction of operation at the real robotic device is lifted.

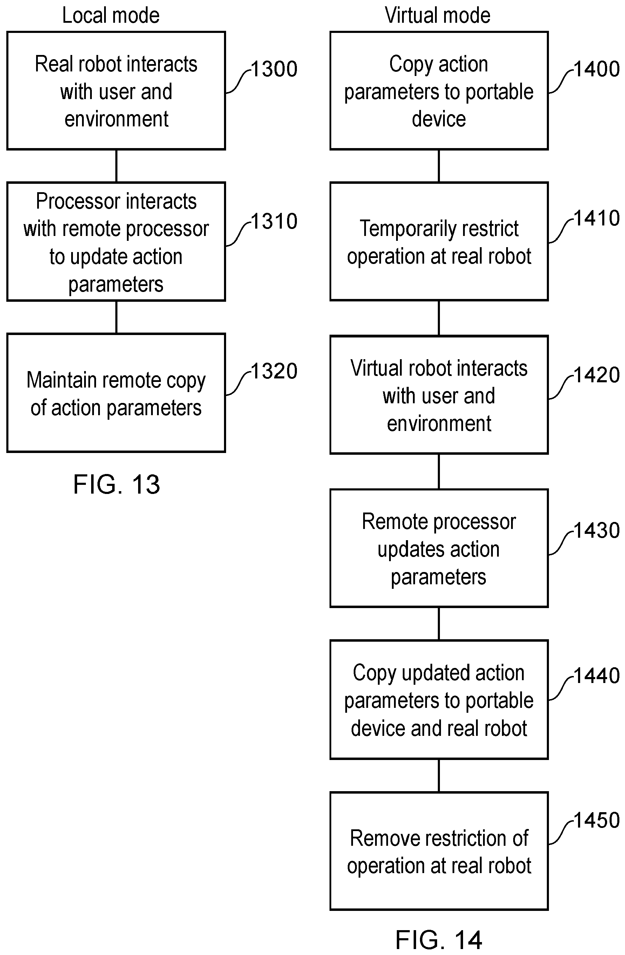

In another example arrangement, as shown in Figure 13 and Figure 14, the system can make use of the remote processor 580 and its associated remote storage 590, for example representing a cloud server service or the like. Figure 13 represents an example of the local mode making use of such a remote processor, in that at a step 1300, similar to the step 1100 of Figure 11, the real robotic device interacts with its user and environment. At a step 1310, the processor 520 of the robotic device interacts with or cooperates with the remote processor 580 to update the action parameters 740. Here, the cooperation could entail a range of options, from the processor 520 performing the update and merely informing the remote processor 580 of the results, the processor 520 preparing data processing tasks associated with updating the action parameters 740 and offloading those data processing tasks to the remote processor 580 and subsequently receiving the results to be stored as revised action parameters 740, through to the system transmitting the user response detected at the step 770 to the remote processor 580 for substantially the whole of the processing associated with the step 780 to be performed at the remote processor 580.

Note that in any of these arrangements, the robotic device continues to have a valid "personality" or mode of interaction with the user while such processing may be performed at least in part at the remote processor 580. In other words, the step 750 can be based upon the prevailing action parameters 740 even if an update to those action parameters is currently in the process of being generated by one or both of the processor 520 and the remote processor 580. Typically, changes to the action parameters implemented by the step 780 will be arranged to be incremental or relatively subtle so that when an update to the action parameters 740 has been prepared and is then implemented, the user does not notice a dramatic change in the behaviour of the robotic device and indeed may not immediately notice that the change has been made.

Note that an optional step 1320 can represent the maintenance, at the remote storage 590 associated with the remote processor 580, of a copy of the prevailing action parameters. In situations where the remote processor 580 performs at least part of the step 780, such a copy can make that process more efficient by avoiding the need to upload the existing action parameters to the remote processor 580 before such a step can be performed. In other situations, where the bulk or all of the step 780 is performed locally at the processor 520, the subsequent uploading of a copy of the prevailing action parameters to the remote processor 580 can assist with processing to be described in connection with Figure 14.

Referring to Figure 14, a further example of operation the virtual mode is provided. Steps 1400, 1410, 1420 corresponds to the step 1200, 1210, 1220 already described in connection with Figure 12. In contrast to Figure 12, however, at a step 1430 the remote processor 580 performs the step 1080, either in its entirety or in partial cooperation with the device processor 810. Here, the remote processor 580 can make use of a copy of the prevailing action parameters maintained by the step 1320 before entry into the virtual mode.

At a step 1440, the updated action parameters generated at least in part by the remote processor 580 at the step 1080 are copied to the portable device and to the real robotic device. A copy may be maintained at the remote storage 590 for use by the remote processor 580 at a next iteration of the step 1430.

The steps 1420... 1440 may be repeated for as long as the system remains in the virtual mode.

Finally, a step 1450 corresponds to the step 1250 discussed above.

Therefore, in examples the apparatus is operable in a current operation mode selected from:
a first operation mode (local mode) in which the behaviour processing circuitry is configured to generate variations of the action parameter data in response to user interaction with the plurality of interfaces of the robotic device; and
a second operation mode (virtual mode) in which the behaviour processing circuitry is configured to generate variations of the action parameter data in response to user interaction with the simulated interface of the portable device.

### Transferring between local and virtual mode

Techniques for controlling the transition between the local mode and the virtual mode (in either direction) will now be described. This transition can be performed by cooperation between any one or more of the processor 520, the device processor 810 and the remote processor 580/890 as an example of control circuitry to initiate a transition between the first operation mode and the second operation mode.

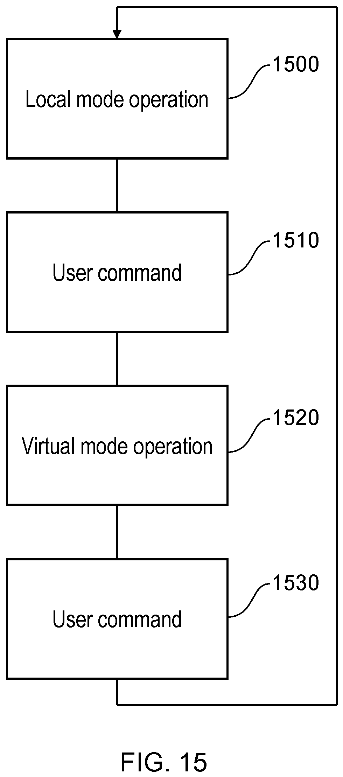

Figure 15 is a schematic flowchart illustrating a first example of such a technique. At a step 1500, the robotic devices operating in the local mode as described above. A user command at a step 1510 causes a transition to the virtual mode operation at a step 1520. Similarly, another user command at a step 1530 causes a transition back to the local mode operation at the step 1500.

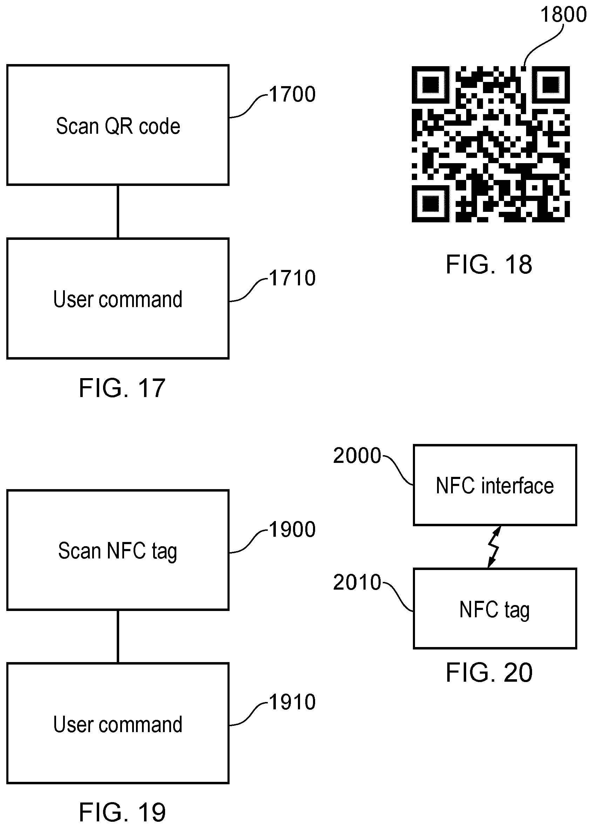

Examples of the user command at the step 1510 or at the step 1520 may be any one or more of:
- a verbal or gesture command to the robotic device;
- a control command issued at the portable device at which the virtual mode is to be initiated and executed;
- a control command issued at a further data processing apparatus having oversight of the control of the robotic device; and
- any of the techniques to be described with reference to Figures 17 to 20.

It is noted that the nature of the user command required at the step 1510 may be different to that of the user command required at the step 1530.

Therefore, the control circuitry (mentioned above) may be configured to control a transition between the first operation mode and the second operation mode in response to a user command to one or both of the robotic device and the portable device.

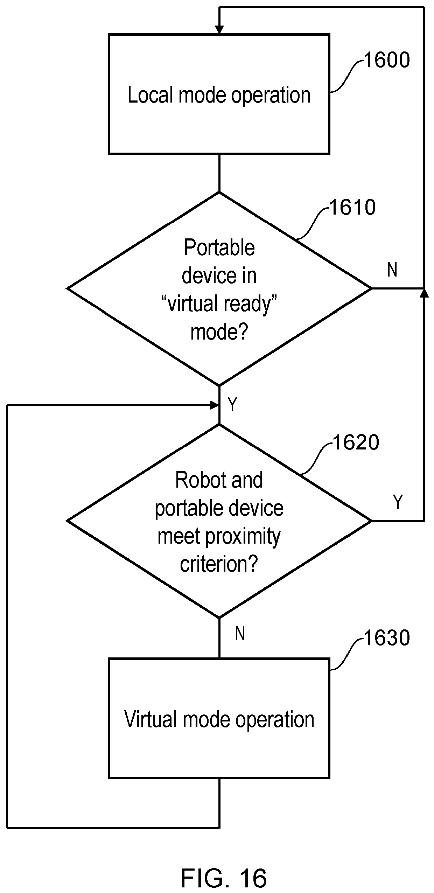

In another example shown schematically in Figure 16, at a step 1600 the robotic device is operating in the local mode. At a step 1610, a test is performed (for example by the robotic device in cooperation with a candidate portable device) as to whether the candidate portable device is ready for virtual mode operation. For example, does the candidate portable device at the appropriate software and capabilities and/or has such software being initiated, for example prepared for execution and/or already provided with a copy of the prevailing action parameters as described above? If the outcome at the step 1610 is negative, then control returns to the step 1600 and the robotic device remains in the local mode.

If, however, the outcome at the step 1610 is positive then control passes to a step 1620. Here, a test is performed as to whether the robotic device and the portable device meet a proximity criterion. Examples of the proximity criterion will be given below, but in general terms, if the criterion is met (representing a positive outcome of the step 1620) and indicating that the robotic device and the portable device are currently close to one another, then control returns to the step 1600 and the robotic device remains in the local mode of operation. If, however, the proximity criterion is not met, indicating that the robotic device and the portable device are not currently close to one another, going the virtual mode of operation is entered into at that portable device at a step 1630. The virtual mode is maintained (as represented by control returning to the step 1620) while the proximity criterion is not met. Once the proximity criterion is met again, indicated by the positive outcome from the step 1620, the local mode of operation is selected.

Examples of the test for the proximity criterion can include one or more of the following:
- are the robotic device and the candidate portable device currently connected to the same WiFi^{®} LAN (local area network)? If so, the proximity criterion is met;
- are the robotic device and the candidate portable device currently within a direct wireless communication range such as that corresponding to a prevailing Bluetooth ^{®} communication link between the robotic device and the candidate portable device? If so, the proximity criterion is met;
- do a global positioning system (GPS) or other location detecting arrangement (which may be implemented as a sensor 410 and/or a part of the motion sensors 850) at the robotic device and the candidate portable device indicate proximity? If so, the proximity criterion is met;
- do the robotic device and the candidate portable device detect correlated audio and/or visual information such as substantially simultaneously detecting a user's voice or other sounds? If so, the proximity criterion is met.

In the arrangement of Figure 16, the result of the detection at the step 1620, in terms of either entering or leaving virtual mode operation, can be confirmed by a user command.

This provides an example of proximity detection circuitry (for example implemented at least in part by one or more of the processors) detecting whether the robotic device and the portable device meet a proximity test, and is configured to control a transition between the first operation mode and the second operation mode in response to the detection.

In some examples each of the robotic device and the portable device comprise respective wireless network interfaces (560, 870); and
the proximity detection circuitry is configured to detect whether the wireless network interfaces of the robotic device and the portable device are currently connected to different respective wireless networks.

Further options for user commands are discussed now with reference to Figures 17 to 20.

Referring to Figure 17, the step 1510 for example can comprise the user scanning a QR code at the step 1700 (an example QR code 1800 being provided at Figure 18), with this potentially taking the place of a separate user command or with a further user command being executed at a step 1710.

For example, a QR code may be or otherwise represented on the robotic device such that scanning that QR code with a given portable device can (a) initiate loading and/or execution of suitable software at the portable device to handle the virtual mode operation and (b) associate the given portable device with that robotic device for the purposes of exchange of action parameter data as discussed above. Optionally, a user command, for example any of the types of commands discussed above, can be used to confirm entry into the virtual mode at the given portable device.

In another example, a portable device at which the virtual mode is to be initiated can generate and display a QR code on the touchscreen display of the portable device. In order to initiate the virtual mode operation, the user then arranges for the camera of the robotic device to scan that QR code. This associates the portable device and the robotic device for the purposes of exchange of action parameter data (for example, via a Wi-Fi^{®} link) and can act as initiation of the virtual mode at the portable device.

In a further example, a printed or other QR code may be scanned by both the robotic device and the portable device. Assuming the two devices scan the same QR code within a predetermined period such as one minute, this can cause the two devices to communicate for the exchange of action parameter data and can act as initiation of the virtual mode at the portable device.

These provide examples in which one or both of the robotic device and the portable device comprise a camera (420, 830); and the control circuitry is configured to control a transition between the first operation mode and the second operation mode in response to the camera capturing an image of a quick response (QR) code. The portable device may comprise a display screen (860) configured to display the QR code.

Other examples shown in Figures 19 and 20 relates to the use of near field communication (NFC) arrangements or other wireless identification arrangements, for example with the robotic device and/or the portable device having an NFC interface 2000 which can communicate with an NFC communication device or "tag" 2010. Here, scanning (initiating wireless communication with) the NFC tag 2010 at a step 1900 of Figure 19 can act in place of a user command 1510 or can act to associate the portable device with the robotic device as discussed above with entry into the virtual mode then been confirmed by a separate user command at a step 1910.

This therefore provides an example of one or both of the robotic device and the portable device comprise a near field communication (NFC) interface; and the control circuitry being configured to control a transition between the first operation mode and the second operation mode in response to the NFC interface interacting with an NFC device.

### Parameter transfer examples

As well as or instead of allowing for transitions between local and virtual mode operation, the present arrangements in which the mode of operation or "personality" of the robotic device as defined by a set of action parameter 740 can be used to allow the transfer of action parameters from one hardware robotic device to another hardware robotic device, for example in a situation in which a first robotic device has a hardware fault, has broken, has been upgraded to new hardware or (for example when a remote copy of the action parameters is provided for example using the techniques of Figure 13 including the step 1320 or the lost or stolen robotic device was operating in the virtual mode so that a copy of the action parameters was held at a portable device) the first robotic device has been stolen or lost.

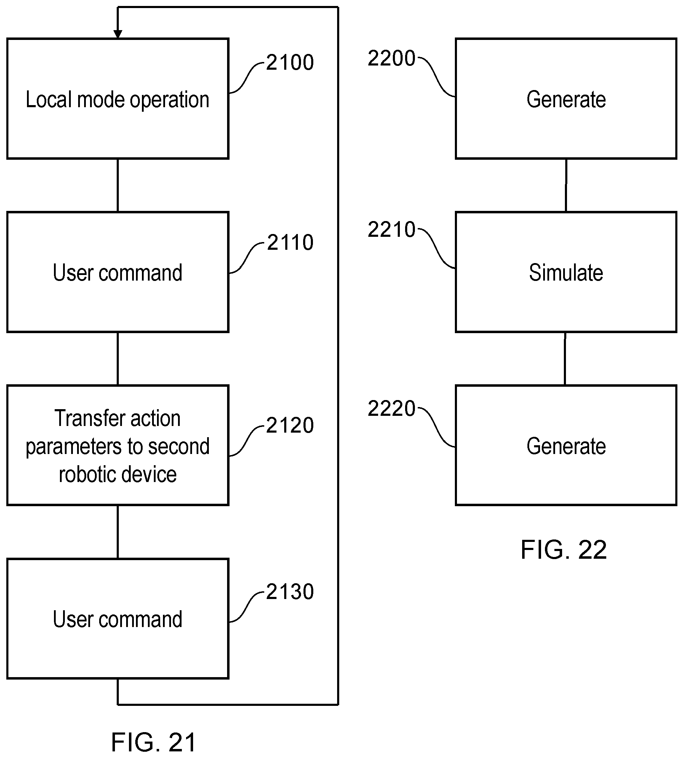

By way of example, Figure 21 schematically illustrates a transfer of action parameter data from a first robotic device to a second robotic device in which, at step 2100 the first robotic device operates in local mode operation. A user command at a step 2110 initiates the transfer at a step 2120 of action parameter data 740 to a second robotic device, with a user command at a step 2130 initiating future operation in the local mode at the *second* robotic device and the restriction or disablement of operation at the initial (first) robotic device. It will be appreciated that the transfer can be connected on a peer-to-peer basis, via a portable device operating in the virtual mode or via the remote process of 580.

This provides an example in which the robotic device is configured to store the action parameter data to a storage medium and selectively to retrieve action parameter data generated stored to a storage medium by a different robotic device.

### Method example

Figure 22 is a schematic flowchart illustrating a method comprising:
generating (at a step 2200) output actions to be executed by one or more output interfaces of a robotic device comprising a plurality of interfaces to allow interaction with a user, the interfaces comprising one or more input interfaces to detect input to the robotic device by the user and the one or more output interfaces to perform output actions, the generating step being performed in response to action parameter data;
simulating (at a step 2210), using a portable device, at least a subset of the plurality of interfaces of the robotic device; and
generating (at a step 2220) variations of the action parameter data in response to user interaction with the plurality of interfaces of the robotic device and in response to user interaction with the at least a subset of the plurality of interfaces simulated by the simulating step.

## Claims

1. Apparatus comprising:
a robotic device (100, 200) comprising:
a plurality of interfaces to allow interaction with a user, the interfaces comprising: one or more input interfaces to detect input to the robotic device by the user, and one or more output interfaces to perform output actions, and
action generating circuitry to generate output actions to be executed by the one or more output interfaces in response to action parameter data,
wherein the output interfaces comprise at least one motorised articulated limb, moveable in response to the action generating circuitry, and
wherein the input interfaces comprise one or more touch sensors to detect physical user interaction with the robotic device, wherein the touch sensors define touch sensitive portions of the robotic device;
a portable device (800) comprising:
a touchscreen display, and
circuitry to provide a simulated interface to simulate at least a subset of the plurality of interfaces of the robotic device;
wherein the simulated interface comprises at least a display, on the touchscreen display, of an animated movement of a simulated representation of the at least one motorised articulated limb, and
wherein the simulated interface maps touch sensitive portions of the robotic device to corresponding portions of the portable device's touchscreen display to detect user touch at the mapped portions of the touchscreen display,
behaviour processing circuitry (520, 580, 810, 890) to generate variations of the action parameter data in response to user interaction with the plurality of interfaces of the robotic device and in response to user interaction with the simulated interface of the portable device; wherein the apparatus is operable in a current operation mode selected from:
a first operation mode in which the behaviour processing circuitry is configured to generate variations of the action parameter data in response to user interaction with the plurality of interfaces of the robotic device; and
a second operation mode in which the behaviour processing circuitry is configured to generate variations of the action parameter data in response to user interaction with the simulated interface of the portable device; and
control circuitry to initiate a transition between the first operation mode and the second operation mode.

2. The apparatus of claim 1, in which the behaviour processing circuitry comprises:
first processing circuitry associated with the robotic device to generate variations of the action parameter data in response to user interaction with the plurality of interfaces of the robotic device; and
second processing circuitry associated with the portable device to generate variations of the action parameter data in response to user interaction with the simulated interface of the portable device.

3. The apparatus of claim 2, in which the first processing circuitry comprises a remote server configured to communicate with the robotic device; or the second processing circuitry comprises a remote server configured to communicate with the robotic device.

4. The apparatus of any preceding claim, in which the control circuitry is configured to control a transition between the first operation mode and the second operation mode in response to a user command to one or both of the robotic device and the portable device.

5. The apparatus of any preceding claim, in which the control circuitry comprises proximity detection circuitry to detect whether the robotic device and the portable device meet a proximity test, and is configured to control a transition between the first operation mode and the second operation mode in response to the detection.

6. The apparatus of claim 5, in which:
each of the robotic device and the portable device comprise respective wireless network interfaces; and
the proximity detection circuitry is configured to detect whether the wireless network interfaces of the robotic device and the portable device are currently connected to different respective wireless networks.

7. The apparatus of any of claims 1 to 4, in which one or both of the robotic device and the portable device comprise a camera; and
the control circuitry is configured to control a transition between the first operation mode and the second operation mode in response to the camera capturing an image of a quick response (QR) code; optionally in which the portable device comprises a display screen configured to display the QR code.

8. The apparatus of any of claims 1 to 4, in which one or both of the robotic device and the portable device comprise a near field communication (NFC) interface; and
the control circuitry is configured to control a transition between the first operation mode and the second operation mode in response to the NFC interface interacting with an NFC device.

9. The apparatus of any preceding claim, in which operation of the plurality of interfaces of the robotic device is at least partially inhibited in the second operation mode.

10. The apparatus of any preceding claim, in which the simulated interface of the portable device is operational only in the second operation mode.

11. The apparatus of any one of the preceding claims, in which the behaviour processing circuitry comprises machine learning circuitry configured to execute a machine learning process to generate the variations of the action parameter data.

12. The apparatus of any one of the preceding claims, in which the robotic device is configured to store the action parameter data to a storage medium and selectively to retrieve action parameter data generated stored to a storage medium by a different robotic device.

13. A method comprising:
generating (2200) output actions to be executed by one or more output interfaces of a robotic device comprising a plurality of interfaces to allow interaction with a user, the interfaces comprising one or more input interfaces to detect input to the robotic device by the user and the one or more output interfaces to perform output actions, the generating step being performed in response to action parameter data,
wherein the output interfaces comprise at least one motorised articulated limb, moveable in response to the action generating circuitry, and
wherein the input interfaces comprise one or more touch sensors to detect physical user interaction with the robotic device, wherein the touch sensors define touch sensitive portions of the robotic device;
providing (2210) a simulated interface to simulate, using a portable device comprising a touchscreen display, at least a subset of the plurality of interfaces of the robotic device,
wherein the simulated interface comprises at least a display, on the touchscreen display, of an animated movement of a simulated representation of the at least one motorised articulated limb, and
wherein the simulated interface maps touch sensitive portions of the robotic device to corresponding portions of the portable device's touchscreen display to detect user touch at the mapped portions of the touchscreen display;
generating (2220) variations of the action parameter data in response to user interaction with the plurality of interfaces of the robotic device and in response to user interaction with the at least a subset of the plurality of interfaces simulated by the simulating step; wherein the generating of variations of the action parameter data is performed in a current operation mode selected from:
a first operation mode in which the variations of the action parameter data are generated in response to user interaction with the plurality of interfaces of the robotic device; and
a second operation mode in which the variations of the action parameter data are generated in response to user interaction with the simulated interface of the portable device; and
initiating a transition between the first operation mode and the second operation mode.

14. Computer software which, when executed by one or more computers, causes the one or more computers to perform the method of claim 13.

## Patentansprüche

1. Einrichtung, umfassend:
eine Robotervorrichtung (100, 200), umfassend:
eine Vielzahl von Schnittstellen, um eine Interaktion mit einem Benutzer zu ermöglichen, die Schnittstellen umfassend: eine oder mehrere Eingabeschnittstellen, um eine Eingabe in die Robotervorrichtung durch den Benutzer zu erfassen, und eine oder mehrere Ausgabeschnittstellen, um Ausgabehandlungen durchzuführen, und
eine Handlungserzeugungsschaltung, um Ausgabehandlungen zu erzeugen, die durch die eine oder die mehreren Ausgabeschnittstellen als Reaktion auf Handlungsparameterdaten auszuführen sind,
wobei die Ausgabeschnittstellen mindestens ein motorisiertes Gelenkglied umfassen, das als Reaktion auf die Handlungserzeugungsschaltung bewegbar ist, und
wobei die Eingabeschnittstellen einen oder mehrere Berührungssensoren umfassen, um eine physische Benutzerinteraktion mit der Robotervorrichtung zu erfassen, wobei die Berührungssensoren berührungsempfindliche Abschnitte der Robotervorrichtung definieren;
eine tragbare Vorrichtung (800), umfassend:
eine Touchscreen-Anzeige und
eine Schaltung, um eine simulierte Schnittstelle bereitzustellen, um mindestens einen Teilsatz der Vielzahl von Schnittstellen der Robotervorrichtung zu simulieren;
wobei die simulierte Schnittstelle mindestens eine Anzeige, auf der Touchscreen-Anzeige, einer animierten Bewegung einer simulierten Darstellung des mindestens einen motorisierten Gelenkglieds umfasst und
wobei die simulierte Schnittstelle berührungsempfindliche Abschnitte der Robotervorrichtung entsprechenden Abschnitten der Touchscreen-Anzeige der tragbaren Vorrichtung zuordnet, um eine Benutzerberührung an den zugeordneten Abschnitten der Touchscreen-Anzeige zu erfassen,
eine Verhaltensverarbeitungsschaltung (520, 580, 810, 890), um Variationen der Handlungsparameterdaten als Reaktion auf die Benutzerinteraktion mit der Vielzahl von Schnittstellen der Robotervorrichtung und als Reaktion auf die Benutzerinteraktion mit der simulierten Schnittstelle der tragbaren Vorrichtung zu erzeugen; wobei die Einrichtung in einem aktuellen Betriebsmodus betriebsfähig ist, ausgewählt aus:
einem ersten Betriebsmodus, wobei die Verhaltensverarbeitungsschaltung konfiguriert ist, um als Reaktion auf die Benutzerinteraktion mit der Vielzahl von Schnittstellen der Robotervorrichtung Variationen der Handlungsparameterdaten zu erzeugen; und
einem zweiten Betriebsmodus, wobei die Verhaltensverarbeitungsschaltung konfiguriert ist, um Variationen der Handlungsparameterdaten als Reaktion auf die Benutzerinteraktion mit der simulierten Schnittstelle der tragbaren Vorrichtung zu erzeugen; und
eine Steuerschaltung, um einen Übergang zwischen dem ersten Betriebsmodus und dem zweiten Betriebsmodus einzuleiten.

2. Einrichtung nach Anspruch 1, wobei die Verhaltensverarbeitungsschaltung umfasst:
eine erste Verarbeitungsschaltung, die mit der Robotervorrichtung verknüpft ist, um Variationen der Handlungsparameterdaten als Reaktion auf die Benutzerinteraktion mit der Vielzahl von Schnittstellen der Robotervorrichtung zu erzeugen; und
eine zweite Verarbeitungsschaltung, die mit der tragbaren Vorrichtung verknüpft ist, um Variationen der Handlungsparameterdaten als Reaktion auf die Benutzerinteraktion mit der simulierten Schnittstelle der tragbaren Vorrichtung zu erzeugen.

3. Einrichtung nach Anspruch 2, wobei die erste Verarbeitungsschaltung einen entfernten Server umfasst, der konfiguriert ist, um mit der Robotervorrichtung zu kommunizieren; oder die zweite Verarbeitungsschaltung einen entfernten Server umfasst, der konfiguriert ist, um mit der Robotervorrichtung zu kommunizieren.

4. Einrichtung nach einem der vorstehenden Ansprüche, wobei die Steuerschaltung konfiguriert ist, um einen Übergang zwischen dem ersten Betriebsmodus und dem zweiten Betriebsmodus als Reaktion auf einen Benutzerbefehl an eine oder beide der Robotervorrichtung und der tragbaren Vorrichtung zu steuern.

5. Einrichtung nach einem der vorstehenden Ansprüche, wobei die Steuerschaltung eine Näherungserfassungsschaltung umfasst, um zu erfassen, ob die Robotervorrichtung und die tragbare Vorrichtung einen Näherungstest erfüllen, und konfiguriert ist, um einen Übergang zwischen dem ersten Betriebsmodus und dem zweiten Betriebsmodus als Reaktion auf die Erfassung zu steuern.

6. Einrichtung nach Anspruch 5, wobei:
jede der Robotervorrichtung und der tragbaren Vorrichtung jeweilige drahtlose Netzwerkschnittstellen umfasst; und
die Näherungserfassungsschaltung konfiguriert ist, um zu erfassen, ob die drahtlosen Netzwerkschnittstellen der Robotervorrichtung und der tragbaren Vorrichtung aktuell mit unterschiedlichen jeweiligen drahtlosen Netzwerken verbunden sind.

7. Einrichtung nach einem der Ansprüche 1 bis 4, wobei eine oder beide der Robotervorrichtung und der tragbaren Vorrichtung eine Kamera umfassen; und
die Steuerschaltung konfiguriert ist, um einen Übergang zwischen dem ersten Betriebsmodus und dem zweiten Betriebsmodus als Reaktion darauf zu steuern, dass die Kamera ein Bild eines Quick-Response-Codes (QR-Codes) aufnimmt; optional wobei die tragbare Vorrichtung einen Anzeigebildschirm umfasst, der konfiguriert ist, um den QR-Code anzuzeigen.

8. Einrichtung nach einem der Ansprüche 1 bis 4, wobei eine oder beide der Robotervorrichtung und der tragbaren Vorrichtung eine Nahfeldkommunikationsschnittstelle (NFC-Schnittstelle) umfassen; und
die Steuerschaltung konfiguriert ist, um einen Übergang zwischen dem ersten Betriebsmodus und dem zweiten Betriebsmodus als Reaktion darauf zu steuern, dass die NFC-Schnittstelle mit einer NFC-Vorrichtung interagiert.

9. Einrichtung nach einem der vorstehenden Ansprüche, wobei ein Betrieb der Vielzahl von Schnittstellen der Robotervorrichtung in dem zweiten Betriebsmodus mindestens teilweise gehemmt ist.

10. Einrichtung nach einem der vorstehenden Ansprüche, wobei die simulierte Schnittstelle der tragbaren Vorrichtung nur in dem zweiten Betriebsmodus betriebsbereit ist.

11. Einrichtung nach einem der vorstehenden Ansprüche, wobei die Verhaltensverarbeitungsschaltung eine Schaltung für maschinelles Lernen umfasst, die konfiguriert ist, um einen Prozess für maschinelles Lernen auszuführen, um die Variationen der Handlungsparameterdaten zu erzeugen.

12. Einrichtung nach einem der vorstehenden Ansprüche, wobei die Robotervorrichtung konfiguriert ist, um die Handlungsparameterdaten auf einem Speichermedium zu speichern und selektiv um erzeugte Handlungsparameterdaten abzurufen, die durch eine unterschiedliche Robotervorrichtung auf einem Speichermedium gespeichert werden.

13. Verfahren, umfassend:
Erzeugen (2200) von Ausgabehandlungen, die durch eine oder mehrere Ausgabeschnittstellen einer Robotervorrichtung auszuführen sind, umfassend eine Vielzahl von Schnittstellen, um die Interaktion mit einem Benutzer zu ermöglichen, die Schnittstellen umfassend eine oder mehrere Eingabeschnittstellen, um die Eingabe in die Robotervorrichtung durch den Benutzer zu erfassen, und die eine oder die mehreren Ausgabeschnittstellen, um Ausgabehandlungen durchzuführen, wobei der Erzeugungsschritt als Reaktion auf Handlungsparameterdaten durchgeführt wird,
wobei die Ausgabeschnittstellen mindestens ein motorisiertes Gelenkglied umfassen, das als Reaktion auf die Handlungserzeugungsschaltung bewegbar ist, und
wobei die Eingabeschnittstellen einen oder mehrere Berührungssensoren umfassen, um eine physische Benutzerinteraktion mit der Robotervorrichtung zu erfassen, wobei die Berührungssensoren berührungsempfindliche Abschnitte der Robotervorrichtung definieren;
Bereitstellen (2210) einer simulierten Schnittstelle, um, unter Verwendung einer tragbaren Vorrichtung, umfassend eine Touchscreen-Anzeige, mindestens einen Teilsatz der Vielzahl von Schnittstellen der Robotervorrichtung zu simulieren,
wobei die simulierte Schnittstelle mindestens eine Anzeige, auf der Touchscreen-Anzeige, einer animierten Bewegung einer simulierten Darstellung des mindestens einen motorisierten Gelenkglieds umfasst und
wobei die simulierte Schnittstelle berührungsempfindliche Abschnitte der Robotervorrichtung entsprechenden Abschnitten der Touchscreen-Anzeige der tragbaren Vorrichtung zuordnet, um die Benutzerberührung an den zugeordneten Abschnitten der Touchscreen-Anzeige zu erfassen;
Erzeugen (2220) von Variationen der Handlungsparameterdaten als Reaktion auf die Benutzerinteraktion mit der Vielzahl von Schnittstellen der Robotervorrichtung und als Reaktion auf die Benutzerinteraktion mit dem mindestens einen Teilsatz der Vielzahl von Schnittstellen, die durch den Simulierungsschritt simuliert werden; wobei das Erzeugen von Variationen der Handlungsparameterdaten in einem aktuellen Betriebsmodus durchgeführt wird, ausgewählt aus:
einem ersten Betriebsmodus, wobei die Variationen der Handlungsparameterdaten als Reaktion auf die Benutzerinteraktion mit der Vielzahl von Schnittstellen der Robotervorrichtung erzeugt werden; und
einem zweitem Betriebsmodus, wobei die Variationen der Handlungsparameterdaten als Reaktion auf die Benutzerinteraktion mit der simulierten Schnittstelle der tragbaren Vorrichtung erzeugt werden; und
Einleiten eines Übergangs zwischen dem ersten Betriebsmodus und dem zweiten Betriebsmodus.

14. Computersoftware, die, wenn sie durch einen oder mehrere Computer ausgeführt wird, den einen oder die mehreren Computer veranlasst, das Verfahren nach Anspruch 13 durchzuführen.

## Revendications

1. Appareil comprenant :
un dispositif robotique (100, 200) comprenant :
une pluralité d'interfaces pour permettre une interaction avec un utilisateur, les interfaces comprenant : une ou plusieurs interfaces d'entrée pour détecter une entrée au dispositif robotique par l'utilisateur, et une ou plusieurs interfaces de sortie pour mettre en œuvre des actions de sortie, et
un système de circuits de génération d'action pour générer des actions de sortie à exécuter par la ou les interfaces de sortie en réponse à des données de paramètres d'action,
dans lequel les interfaces de sortie comprennent au moins un membre articulé motorisé, mobile en réponse au système de circuits de génération d'action, et
dans lequel les interfaces d'entrée comprennent un ou plusieurs capteurs tactiles pour détecter des interactions physiques d'utilisateur avec le dispositif robotique, dans lequel les capteurs tactiles définissent des parties tactiles du dispositif robotique ;
un dispositif portable (800) comprenant :
un affichage à écran tactile, et
un système de circuits pour fournir une interface simulée pour simuler au moins un sous-ensemble de la pluralité d'interfaces du dispositif robotique ;
dans lequel l'interface simulée comprend au moins un affichage, sur l'affichage à écran tactile, d'un mouvement animé d'une représentation simulée de l'au moins un membre articulé motorisé, et
dans lequel l'interface simulée met en correspondance des parties tactiles du dispositif robotique avec des parties correspondantes de l'affichage à écran tactile du dispositif portable pour détecter un contact tactile d'utilisateur au niveau des parties mises en correspondance de l'affichage à écran tactile,
un système de circuits de traitement de comportement (520, 580, 810, 890) pour générer des variations des données de paramètres d'action en réponse à une interaction d'utilisateur avec la pluralité d'interfaces du dispositif robotique et en réponse à une interaction d'utilisateur avec l'interface simulée du dispositif portable ; dans lequel l'appareil est fonctionnel dans un mode de fonctionnement actuel choisi parmi :
un premier mode de fonctionnement dans lequel le système de circuits de traitement de comportement est configuré pour générer des variations des données de paramètres d'action en réponse à une interaction d'utilisateur avec la pluralité d'interfaces du dispositif robotique ; et
un second mode de fonctionnement dans lequel le système de circuits de traitement de comportement est configuré pour générer des variations des données de paramètres d'action en réponse à une interaction d'utilisateur avec l'interface simulée du dispositif portable ; et
un système de circuits de commande pour initier une transition entre le premier mode de fonctionnement et le second mode de fonctionnement.

2. Appareil selon la revendication 1, dans lequel le système de circuits de traitement de comportement comprend :
un premier système de circuits de traitement associé au dispositif robotique pour générer des variations des données de paramètres d'action en réponse à une interaction d'utilisateur avec la pluralité d'interfaces du dispositif robotique ; et
un second système de circuits de traitement associé au dispositif portable pour générer des variations des données de paramètres d'action en réponse à une interaction d'utilisateur avec l'interface simulée du dispositif portable.

3. Appareil selon la revendication 2, dans lequel le premier système de circuits de traitement comprend un serveur distant configuré pour communiquer avec le dispositif robotique ; ou le second système de circuits de traitement comprend un serveur distant configuré pour communiquer avec le dispositif robotique.

4. Appareil selon l'une quelconque revendication précédente, dans lequel le système de circuits de commande est configuré pour commander une transition entre le premier mode de fonctionnement et le second mode de fonctionnement en réponse à une instruction d'utilisateur vers l'un et/ou l'autre du dispositif robotique et du dispositif portable.

5. Appareil selon l'une quelconque revendication précédente, dans lequel le système de circuits de commande comprend un système de circuits de détection de proximité pour détecter si le dispositif robotique et le dispositif portable respectent un test de proximité, et est configuré pour commander une transition entre le premier mode de fonctionnement et le second mode de fonctionnement en réponse à la détection.

6. Appareil selon la revendication 5, dans lequel :
chacun du dispositif robotique et du dispositif portable comprend des interfaces réseau sans fil respectives ; et
le système de circuits de détection de proximité est configuré pour détecter si les interfaces réseau sans fil du dispositif robotique et du dispositif portable sont actuellement connectées à des réseaux sans fil respectifs différents.

7. Appareil selon l'une quelconque des revendications 1 à 4, dans lequel l'un et/ou l'autre du dispositif robotique et du dispositif portable comprennent une caméra ; et
le système de circuits de commande est configuré pour commander une transition entre le premier mode de fonctionnement et le second mode de fonctionnement en réponse à la caméra capturant une image d'un code de réponse rapide (QR) ; facultativement dans lequel le dispositif portable comprend un écran d'affichage configuré pour afficher le code QR.

8. Appareil selon l'une quelconque des revendications 1 à 4, dans lequel l'un et/ou l'autre du dispositif robotique et du dispositif portable comprennent une interface de communication en champ proche (NFC) ; et
le système de circuits de commande est configuré pour commander une transition entre le premier mode de fonctionnement et le second mode de fonctionnement en réponse à l'interface NFC interagissant avec un dispositif NFC.

9. Appareil selon l'une quelconque revendication précédente, dans lequel un fonctionnement de la pluralité d'interfaces du dispositif robotique est au moins partiellement inhibé dans le second mode de fonctionnement.

10. Appareil selon l'une quelconque revendication précédente, dans lequel l'interface simulée du dispositif portable est fonctionnelle uniquement dans le second mode de fonctionnement.

11. Appareil selon l'une quelconque des revendications précédentes, dans lequel le système de circuits de traitement de comportement comprend un système de circuits d'apprentissage automatique configuré pour exécuter un processus d'apprentissage automatique pour générer les variations des données de paramètres d'action.

12. Appareil selon l'une quelconque des revendications précédentes, dans lequel le dispositif robotique est configuré pour stocker les données de paramètres d'action dans un support de stockage et pour récupérer sélectivement des données de paramètres d'action générées stockées dans un support de stockage par un dispositif robotique différent.

13. Procédé comprenant :
la génération (2200) d'actions de sortie à exécuter par une ou plusieurs interfaces de sortie d'un dispositif robotique comprenant une pluralité d'interfaces pour permettre une interaction avec un utilisateur, les interfaces comprenant une ou plusieurs interfaces d'entrée pour détecter une entrée au dispositif robotique par l'utilisateur et à la ou aux interfaces de sortie pour mettre en œuvre des actions de sortie, l'étape de génération étant mise en œuvre en réponse aux données de paramètres d'action,
dans lequel les interfaces de sortie comprennent au moins un membre articulé motorisé, mobile en réponse au système de circuits de génération d'action, et
dans lequel les interfaces d'entrée comprennent un ou plusieurs capteurs tactiles pour détecter des interactions physiques d'utilisateur avec le dispositif robotique, dans lequel les capteurs tactiles définissent des parties tactiles du dispositif robotique ;
la fourniture (2210) d'une interface simulée pour simuler, à l'aide d'un dispositif portable comprenant un affichage à écran tactile, au moins un sous-ensemble de la pluralité d'interfaces du dispositif robotique,
dans lequel l'interface simulée comprend au moins un affichage, sur l'affichage à écran tactile, d'un mouvement animé d'une représentation simulée de l'au moins un membre articulé motorisé, et
dans lequel l'interface simulée met en correspondance des parties tactiles du dispositif robotique avec des parties correspondantes de l'affichage à écran tactile du dispositif portable pour détecter un contact tactile d'utilisateur au niveau des parties mises en correspondance de l'affichage à écran tactile ;
la génération (2220) de variations des données de paramètres d'action en réponse à une interaction d'utilisateur avec la pluralité d'interfaces du dispositif robotique et en réponse à une interaction d'utilisateur avec l'au moins un sous-ensemble de la pluralité d'interfaces simulées par l'étape de simulation ; dans lequel la génération de variations des données de paramètres d'action est mise en œuvre dans un mode de fonctionnement actuel choisi parmi :
un premier mode de fonctionnement dans lequel les variations des données de paramètres d'action sont générées en réponse à une interaction d'utilisateur avec la pluralité d'interfaces du dispositif robotique ; et
un second mode de fonctionnement dans lequel les variations des données de paramètres d'action sont générées en réponse à une interaction d'utilisateur avec l'interface simulée du dispositif portable ; et
l'initiation d'une transition entre le premier mode de fonctionnement et le second mode de fonctionnement.

14. Logiciel d'ordinateur qui, lorsqu'il est exécuté par un ou plusieurs ordinateurs, amène le ou les ordinateurs à mettre en œuvre le procédé selon la revendication 13.
